(19) Europäisches Patentamt
European Patent Office
Office européen des brevets

(11) **EP 1 549 978 B1**

(12) **FASCICULE DE BREVET EUROPEEN**

(45) Date de publication et mention
de la délivrance du brevet:
**08.08.2007 Bulletin 2007/32**

(21) Numéro de dépôt: **03807865.5**

(22) Date de dépôt: **03.10.2003**

(51) Int Cl.:
*G02B 6/036* (2006.01)     *G02B 6/02* (2006.01)

(86) Numéro de dépôt international:
**PCT/FR2003/002903**

(87) Numéro de publication internationale:
**WO 2004/034110 (22.04.2004 Gazette 2004/17)**

(54) **FIBRE OPTIQUE A COMPENSATION DE DISPERSION CHROMATIQUE**

OPTISCHE FASER MIT KOMPENSATION DER CHROMATISCHEN DISPERSION

OPTICAL FIBRE WITH CHROMATIC DISPERSION COMPENSATION

(84) Etats contractants désignés:
**AT BE BG CH CY CZ DE DK EE ES FI FR GB GR HU IE IT LI LU MC NL PT RO SE SI SK TR**

(30) Priorité: **07.10.2002 FR 0212403**

(43) Date de publication de la demande:
**06.07.2005 Bulletin 2005/27**

(60) Demande divisionnaire:
**07011293.3**

(73) Titulaire: **Draka Comteq B.V.**
**1083 HJ Amsterdam (NL)**

(72) Inventeurs:
• **BEAUMONT, Florent**
**5651 CA Eindhoven (NL)**
• **SILLARD, Pierre**
**78150 Le Chesnay (FR)**
• **FLEURY, Ludovic**
**78730 Saint Arnault en Yvelines (FR)**
• **GORLIER, Maxime**
**75008 Paris (FR)**
• **DE MONTMORILLON, Louis-Anne**
**78000 Versailles (FR)**
• **NOUCHI, Pascale**
**78600 Maisons-Laffitte (FR)**

(74) Mandataire: **Valkonet, Rutger et al**
**Algemeen Octrooi- en Merkenbureau**
**P.O. Box 645**
**5600 AP Eindhoven (NL)**

(56) Documents cités:
**EP-A- 0 984 309           EP-A- 1 111 414**
**WO-A-02/19576             US-B1- 6 349 163**

• **PATENT ABSTRACTS OF JAPAN vol. 2002, no. 07, 3 juillet 2002 (2002-07-03) -& JP 2002 082251 A (SUMITOMO ELECTRIC IND LTD), 22 mars 2002 (2002-03-22)**

**Description**

L'invention concerne le domaine des fibres optiques pour réseau de transmission à multiplexage en longueur d'onde.

L'augmentation des débits d'information sur ce type de réseau impose une compensation de la dispersion chromatique et de la pente de dispersion sur une bande spectrale de plus en plus large. La bande dite S correspond à une bande spectrale allant approximativement de 1460nm à 1530nm. La bande dite C correspond à une bande spectrale allant approximativement de 1530nm à 1565nm. La bande dite L correspond à une bande spectrale allant approximativement de 1565nm à 1625nm. La bande dite U correspond à une bande spectrale allant approximativement de 1625nm à 1675nm. La bande spectrale la plus couramment utilisée est la bande C. De plus en plus, apparaît une tendance à vouloir, en plus de la bande C, utiliser les bandes S et L, voire même la bande U.

Dans l'art antérieur, il est connu d'associer certains types de fibres optiques à dispersion décalée réduisant les effets non-linéaires croisés (« non-zero dispersion shifted fiber » en terminologie anglo-saxonne correspondant à l'abréviation NZ-DSF) à des fibres de compensation de dispersion (« dispersion compensating fiber » en terminologie anglo-saxonne correspondant à l'abréviation DCF), ce qui permet d'obtenir une ligne de transmission dont la dispersion est nulle sur une large plage spectrale.

Selon un premier art antérieur par exemple décrit dans la demande de brevet WO 01/01179, il est connu d'utiliser une fibre optique à compensation de dispersion chromatique présentant une faible pente, mais le rapport dispersion chromatique sur pente de dispersion chromatique pour cette fibre optique est trop faible et ne permet pas de compenser efficacement des fibres de ligne de type NZDSF à pente de dispersion chromatique faible.

Selon un deuxième art antérieur présenté à la conférence OECC/IOOC'01 dans un rapport intitulé « dispersion flattened fiber with high negative dispersion », des simulations numériques présentent une fibre optique à compensation de dispersion chromatique dont le rapport dispersion chromatique sur pente de dispersion chromatique est très élevé, mais les simulations, présentées oralement à cette même conférence, ne les confirment pas et présentent au contraire des valeurs usuelles dont un diamètre de mode de l'ordre de 4 $\mu$m.

Selon un troisième art antérieur décrit dans la demande de brevet WO 02/19576, il est connu d'utiliser un fibre optique, ayant une dispersion chromatique entre -2 and -20 ps/nm-km pour un lien optique qui permet une amplification Raman efficace.

Selon un quatrième art antérieur décrit dans le brevet Américain 6,349,163, il est connu d'utiliser une fibre optique à compensation de dispersion chromatique ayant une dispersion chromatique < -150 pm/nm-km.

Selon un cinquième art antérieur décrit dans la demande de brevet Européen 1 111 414, il est connu d'utiliser une fibre optique à compensation de dispersion chromatique ayant une dispersion chromatique entre -3 and -20 ps/nm-km pour permettre une transmission long-courrier de large volume.

L'invention est définie dans la revendication 1 et propose une fibre optique à compensation de dispersion chromatique qui, ayant un rapport dispersion chromatique sur pente de dispersion chromatique suffisamment élevé, et avantageusement une pente de dispersion chromatique faible, peut compenser une fibre optique de ligne de type NZ-DSF à faible pente de dispersion chromatique. La fibre optique à compensation de dispersion chromatique selon l'invention possède également un diamètre de mode assez élevé, ce qui lui permet d'être utilisable dans des lignes de transmission optique à très hauts débits, par exemple supérieur à 40 Gigabits par seconde. Le compromis réalisé par la fibre optique à compensation de dispersion chromatique selon l'invention permet une compensation efficace sur une très large plage spectrale pouvant aller jusqu'à englober les bandes S, C, L et U.

Selon l'invention, il est prévu une fibre optique à compensation de dispersion chromatique sur plusieurs bandes spectrales dont au moins la bande C, pour réseau de transmission à multiplexage en longueur d'onde, comportant successivement du centre vers la périphérie un coeur présentant un profil d'indice variable puis une gaine d'indice constant, le profil d'indice variable du coeur comportant successivement, du centre vers la périphérie, une tranche centrale d'indice maximum supérieur à l'indice de la gaine, une tranche enterrée d'indice minimum inférieur à l'indice de la gaine, une tranche annulaire d'indice maximum supérieur à l'indice de la gaine et inférieur à l'indice maximum de la tranche centrale, les rayons et les indices de chacune des tranches étant déterminés de manière à ce que la fibre optique à compensation de dispersion présente, d'une part à la longueur d'onde de 1550nm, premièrement une dispersion chromatique inférieure à -40ps/nm.km, deuxièmement un rapport dispersion chromatique sur pente de dispersion chromatique dont la valeur absolue est supérieure à 750nm, troisièmement un diamètre de mode supérieur à 5$\mu$m, et d'autre part à la longueur d'onde de 1625nm, des pertes par courbure pour un rayon de 10mm qui sont inférieures à 400dB/m.

De préférence, les rayons et les indices de chacune des tranches sont déterminés de manière à ce que la fibre optique à compensation de dispersion présente, à la longueur d'onde de 1550nm, un rapport dispersion chromatique sur pente de dispersion chromatique dont la valeur absolue est supérieure à 1500nm.

De préférence, la fibre optique à compensation de dispersion chromatique selon l'invention compense la dispersion chromatique d'une fibre optique de ligne sur les bandes spectrales S, C, L et U.

De préférence, les rayons et les indices de chacune des tranches de la fibre optique à compensation de dispersion selon l'invention sont déterminés de manière à ce que ladite fibre optique à compensation de dispersion présente, à la longueur d'onde de 1550nm, une pente de dispersion chromatique dont la valeur absolue est inférieure à 0,02ps/nm$^2$.km.

De préférence, les rayons et les indices de chacune des tranches tranches de la fibre optique à compensation de dispersion selon l'invention sont déterminés de manière à ce que ladite fibre optique à compensation de dispersion présente, à la longueur d'onde de 1550nm, une surface effective supérieure à 20$\mu$m$^2$.

La fibre optique à compensation de dispersion selon l'invention est associée à une fibre optique de ligne dans un système de transmission à fibre optique. Dans une forme de réalisation, le système de transmission à fibre optique comprend l'association d'une fibre optique de ligne et d'une fibre optique à compensation de dispersion selon l'invention en module.

Dans un premier mode de réalisation préférentiel de l'invention, la fibre optique à compensation de dispersion chromatique selon l'invention comprend un premier type de profil d'indice variable du coeur à trois tranches. Le premier type de profil d'indice variable du coeur est successivement constitué, du centre vers la périphérie, d'une tranche centrale d'indice maximum supérieur à l'indice de la gaine, d'une tranche enterrée d'indice minimum inférieur à l'indice de la gaine, d'une tranche annulaire d'indice maximum supérieur à l'indice de la gaine et inférieur à l'indice maximum de la tranche centrale. La tranche centrale est de préférence en forme de trapèze ou de rectangle, mais elle peut aussi être par exemple en forme de triangle ou en alpha. Les autres tranches sont de préférence en forme de rectangle, mais elles peuvent aussi être par exemple en forme de trapèze ou de triangle ou en alpha.

Afin d'augmenter l'étendue de la plage spectrale pour laquelle la dispersion chromatique de la fibre optique de ligne est compensée le plus efficacement possible par la fibre optique à compensation de dispersion chromatique selon l'invention ainsi que les autres propriétés de la fibre optique à compensation de dispersion chromatique selon l'invention, un certain nombre des plages ou de relations préférentielles notamment pour les indices et les rayons du deuxième type de profil d'indice du coeur vont maintenant être données.

Dans une première famille de fibres optiques à compensation de dispersion chromatique et non couverte par les revendications, les rayons et les indices de chacune des tranches sont déterminés de manière à ce que la fibre optique à compensation de dispersion présente, à la longueur d'onde de 1550nm, une dispersion chromatique comprise entre -40ps/nm.km et -8ps/nm.km. C'est dans cette première famille, plutôt que dans la deuxième famille décrite ultérieurement qu'il est particulièrement avantageux que la fibre optique à compensation de dispersion selon l'invention présente une faible pente de dispersion chromatique.

De préférence, la différence ($\Delta n_2$) entre l'indice minimum de la tranche enterrée et l'indice de la gaine est comprise entre -3,0.10$^{-3}$ et 0,0.10$^{-3}$ et le rayon extérieur ($r_2$) de la tranche enterrée est compris entre 5,8$\mu$m et 8,5$\mu$m.

De préférence, la différence ($\Delta n_3$) entre l'indice maximum de la tranche annulaire et l'indice de la gaine est comprise entre 1,0.10$^{-3}$ et 6,0.10$^{-3}$ et le rayon extérieur ($r_3$) de la tranche annulaire est compris entre 7,2$\mu$m et 9,7$\mu$m.

De préférence, la valeur du double de l'intégrale

$$\left(S_1 = 2.\int_0^{r1} \Delta n(r).r.dr\right),$$ entre un rayon nul et le rayon

($r_1$) de la partie de la tranche centrale présentant un indice supérieur à l'indice de la gaine, du produit du rayon par la différence d'indice par rapport à la gaine, est comprise entre 39.10$^{-3}$ et 65.10$^{-3}$ $\mu$m$^2$.

De préférence, la valeur du double de l'intégrale

$$\left(S_2 = 2.\int_{r1}^{r2} \Delta n(r).r.dr\right),$$ entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, du produit du rayon par la différence d'indice par rapport à la gaine, est comprise entre -150.10$^{-3}$ et -10.10$^{-3}$ $\mu$m$^2$.

De préférence, la valeur du double de l'intégrale

$$\left(S_3 = 2.\int_{r2}^{r3} \Delta n(r).r.dr\right),$$ entre le rayon ($r_2$) de la partie de la tranche enterrée présentant un indice inférieur à l'indice de la gaine et le rayon ($r_3$) de la partie de la tranche annulaire présentant un indice supérieur à l'indice de la gaine, du produit du rayon par la différence d'indice par rapport à la gaine, est comprise entre 30.10$^{-3}$ et 140.10$^{-3}$ $\mu$m$^2$.

De préférence, la valeur du triple de l'intégrale

$$\left(S_{11} = 3.\int_0^{r1} \Delta n(r).r^2.dr\right),$$ entre un rayon nul et le

rayon ($r_1$) de la partie de la tranche centrale présentant un indice supérieur à l'indice de la gaine, du produit du carré du rayon par la différence d'indice par rapport à l'indice de la gaine, est comprise entre 59.10$^{-3}$ $\mu$m$^3$ et 123.1 0$^{-3}$ $\mu$m$^3$.

Lorsque la tranche centrale est en forme de rectangle, la différence ($\Delta n_1$) entre l'indice maximum de la tranche centrale et l'indice de la gaine est préférentiellement comprise entre 14,0.10$^{-3}$ et 20,0.10$^{-3}$ et le rayon ($r_1$) de la partie de la tranche centrale présentant un indice supérieur à l'indice de la gaine est préférentiellement compris entre 1,4 $\mu$m et 1,9 $\mu$m.

Lorsque la tranche centrale est en forme de trapèze, la différence ($\Delta n_1$) entre l'indice maximum de la tranche centrale et l'indice de la gaine est préférentiellement comprise entre $14{,}0.10^{-3}$ et $20{,}0.10^{-3}$, le rayon ($r_1$) de la partie de la tranche centrale présentant un indice supérieur à l'indice de la gaine est préférentiellement compris entre $1{,}4\mu$m et $1{,}9\mu$m et le rayon ($r_{1a}$) de la partie de la tranche centrale présentant l'indice maximum de la tranche centrale est préférentiellement compris entre $1{,}3\mu$m et $1{,}9\mu$m.

Dans une deuxième famille de fibres optiques à compensation de dispersion chromatique qui correspond à l'invention, les rayons et les indices de chacune des tranches sont déterminés de manière à ce que la fibre optique à compensation de dispersion présente, à la longueur d'onde de 1550nm, une dispersion chromatique inférieure à -40ps/nm.km.

De préférence, la différence ($\Delta n_2$) entre l'indice minimum de la tranche enterrée et l'indice de la gaine est comprise entre $-5{,}0.10^{-3}$ et $0{,}0.10^{-3}$ et le rayon extérieur ($r_2$) de la tranche enterrée est compris entre $3{,}7\mu$m et $6{,}7\mu$m.

De préférence, la différence ($\Delta n_3$) entre l'indice maximum de la tranche annulaire et l'indice de la gaine est comprise entre $1{,}0.10^{-3}$ et $8{,}0.10^{-3}$ et le rayon extérieur ($r_3$) de la tranche annulaire est compris entre $6{,}1\mu$m et $8{,}4\mu$m.

De préférence, la valeur du double de l'intégrale

$$\left( S_1 = 2. \int_0^{r1} \Delta n(r).r.dr \right),$$ entre un rayon nul et le rayon

($r_1$) de la partie de la tranche centrale présentant un indice supérieur à l'indice de la gaine, du produit du rayon par la différence d'indice par rapport à la gaine, est comprise entre $32.10^{-3}$ et $52.10^{-3}$ $\mu$m².

La valeur du double de l'intégrale

$$\left( S_2 = 2. \int_{r1}^{r2} \Delta n(r).r.dr \right),$$ entre le rayon ($r_1$) de la partie

de la tranche centrale présentant un indice supérieur à l'indice de la gaine et le rayon ($r_2$) de la partie de la tranche enterrée présentant un indice inférieur à l'indice de la gaine, du produit du rayon par la différence d'indice par rapport à la gaine, est comprise entre $-70.10^{-3}$ et $-4.10^{-3}$ $\mu$m².

De préférence, la valeur du double de l'intégrale

$$\left( S_3 = 2. \int_{r2}^{r3} \Delta n(r).r.dr \right),$$ entre le rayon ($r_2$) de la partie de la tranche enterrée présentant un indice inférieur à l'indice de la gaine et le rayon ($r_3$) de la partie de la tranche annulaire présentant un indice supérieur à l'indice de la gaine, du produit du rayon par la différence d'indice par rapport à la gaine, est comprise entre $7.10^{-3}$ et $150.10^{-3}$ $\mu$m².

De préférence, la valeur du triple de l'intégrale

$$\left( S_{11} = 3. \int_0^{r1} \Delta n(r).r^2.dr \right),$$ entre un rayon nul et le

rayon ($r_1$) de la partie de la tranche centrale présentant un indice supérieur à l'indice de la gaine, du produit du carré du rayon par la différence d'indice par rapport à l'indice de la gaine, est comprise entre $40.10^{-3}$ $\mu$m³ et $80.10^{-3}$ $\mu$m³.

Lorsque la tranche centrale est en forme de rectangle, la différence ($\Delta n_1$) entre l'indice maximum de la tranche centrale et l'indice de la gaine est préférentiellement comprise entre $17{,}0.10^{-3}$ et $25{,}0.10^{-3}$ et le rayon ($r_1$) de la partie de la tranche centrale présentant un indice supérieur à l'indice de la gaine est préférentiellement compris entre $1{,}2\mu$m et $1{,}7\mu$m.

Lorsque la tranche centrale est en forme de trapèze, la différence ($\Delta n_1$) entre l'indice maximum de la tranche centrale et l'indice de la gaine est préférentiellement comprise entre $17{,}0.10^{-3}$ et $25{,}0.10^{-3}$, le rayon ($r_1$) de la partie de la tranche centrale présentant un indice supérieur à l'indice de la gaine est préférentiellement compris entre $1{,}2\mu$m et $1{,}7\mu$m et le rayon ($r_{1a}$) de la partie de la tranche centrale présentant l'indice maximum de la tranche centrale est préférentiellement compris entre $1{,}1\mu$m et $1{,}7\mu$m.

De préférence, pour toutes les fibres optiques à compensation de dispersion chromatique selon l'invention correspondant au premier mode de réalisation, les rayons et les indices de chacune des tranches sont déterminés de manière à ce que la fibre optique à compensation de dispersion présente une longueur d'onde de coupure théorique supérieure à 1600nm.

Dans un deuxième mode de réalisation préférentiel de l'invention, la fibre optique à compensation de dispersion chromatique selon l'invention comprend un deuxième type de profil d'indice variable du coeur à quatre tranches. Le deuxième type de profil d'indice variable du coeur est successivement constitué, du centre vers la périphérie, d'une tranche centrale d'indice maximum supérieur à l'indice de la gaine, d'une première tranche enterrée d'indice minimum inférieur à l'indice de la gaine, d'une tranche annulaire d'indice maximum supérieur à l'indice de la gaine et inférieur à l'indice maximum de la tranche centrale, d'une deuxième tranche enterrée d'indice minimum inférieur à l'indice de la gaine. La tranche centrale est de préférence en forme de rectangle, mais elle peut aussi être en forme de trapèze ou de triangle ou en alpha. Les autres tranches sont de préférence en forme de rectangle, mais elles peuvent aussi être par exemple en forme de trapèze ou de triangle ou en alpha.

Dans un troisième mode de réalisation, la fibre optique à compensation de dispersion chromatique selon l'invention comprend un troisième type de profil d'indice variable du coeur qui est successivement constitué, du centre vers la périphérie, d'une tranche centrale d'indice maximum supérieur à l'indice de la gaine, d'une tranche enterrée d'indice minimum inférieur à l'indice de la gaine, d'une première tranche annulaire d'indice maximum supérieur à l'indice de la gaine et inférieur à l'indice maximum de la tranche centrale, d'une deuxième tranche annulaire d'indice maximum supérieur à l'indice de la gaine et supérieur à l'indice de la première tranche annulaire. La tranche centrale est de préférence en forme de rectangle, mais elle peut aussi être en forme de trapèze ou de triangle ou en alpha. Les autres tranches sont de préférence en forme de rectangle, mais elles peuvent aussi être par exemple en forme de trapèze ou de triangle ou en alpha.

Dans un quatrième mode de réalisation, la fibre optique à compensation de dispersion chromatique selon l'invention comprend un quatrième type de profil d'indice variable du coeur qui est successivement constitué, du centre vers la périphérie, d'une tranche centrale d'indice maximum supérieur à l'indice de la gaine, d'une première tranche enterrée d'indice minimum inférieur à l'indice de la gaine, d'une deuxième tranche enterrée d'indice minimum inférieur à l'indice de la gaine et supérieur à l'indice de la première tranche enterrée, d'une tranche annulaire d'indice maximum supérieur à l'indice de la gaine et inférieur à l'indice maximum de la tranche centrale. La tranche centrale est de préférence en forme de rectangle, mais elle peut aussi être en forme de trapèze ou de triangle ou en alpha. Les autres tranches sont de préférence en forme de rectangle, mais elles peuvent aussi être par exemple en forme de trapèze ou de triangle ou en alpha.

De préférence, pour toutes les fibres optiques à compensation de dispersion chromatique selon l'invention correspondant aux deuxième, troisième et quatrième modes de réalisation, les rayons et les indices de chacune des tranches sont déterminés de manière à ce que la fibre optique à compensation de dispersion présente une longueur d'onde de coupure théorique supérieure à 1550nm.

L'invention sera mieux comprise et d'autres particularités et avantages apparaîtront à l'aide de la description ci-après et des dessins joints, donnés à titre d'exemples, où :

- la figure 1 représente schématiquement un exemple de premier type de profil à trois tranches d'une fibre optique à compensation de dispersion chromatique décrit dans cette demande ;
- la figure 2 représente un tableau comprenant les valeurs de rayons et de différences d'indice pour une dizaine d'exemples de profils de cet exemple de premier type de fibre optique à compensation de dispersion chromatique ;
- la figure 3 représente un tableau comprenant certaines propriétés des profils de fibre optique à compensation de dispersion chromatique définis à la figure 2 ;
- la figure 4 représente un tableau comprenant d'autres propriétés des profils de fibre optique à compensation de dispersion chromatique définis à la figure 2 ;
- la figure 5 représente un tableau comprenant d'autres propriétés des profils de fibre optique à compensation de dispersion chromatique définis à la figure 2 ;
- la figure 6 représente un tableau comprenant d'autres propriétés des profils de fibre optique à compensation de dispersion chromatique définis à la figure 2 ;
- la figure 7 représente schématiquement un autre exemple de premier type de profil à trois tranches d'une fibre optique à compensation de dispersion chromatique décrit dans cette demande ;
- la figure 8 représente un tableau comprenant les valeurs de rayons et de différences d'indice pour une dizaine d'exemples de profils de cet autre exemple de premier type de fibre optique à compensation de dispersion chromatique ;
- la figure 9 représente un tableau comprenant certaines propriétés des profils de fibre optique à compensation de dispersion chromatique définis à la figure 8 ;
- la figure 10 représente un tableau comprenant d'autres propriétés des profils de fibre optique à compensation de dispersion chromatique définis à la figure 8 ;
- la figure 11 représente un tableau comprenant d'autres propriétés des profils de fibre optique à compensation de dispersion chromatique définis à la figure 8 ;
- la figure 12 représente un tableau comprenant d'autres propriétés des profils de fibre optique à compensation de dispersion chromatique définis à la figure 8 ;
- la figure 13 représente schématiquement des deuxième, troisième et quatrième types de profil à quatre tranches d'une fibre optique à compensation de dispersion chromatique décrits dans cette demande ;
- la figure 14 représente un tableau comprenant les valeurs de rayons et de différences d'indice pour une dizaine d'exemples des deuxième, troisième et quatrième types de profil de fibre optique à compensation de dispersion chromatique ;
- la figure 15 représente un tableau comprenant certaines propriétés des profils de fibre optique à compensation de dispersion chromatique définis à la figure 14 ;
- la figure 16 représente un tableau comprenant d'autres propriétés des profils de fibre optique à compensation de dispersion chromatique définis à la figure 14 ;
- la figure 17 représente un tableau comprenant d'autres propriétés des profils de fibre optique à compensation de dispersion chromatique définis à la figure 14 ;

- la figure 18 représente un tableau comprenant d'autres propriétés des profils de fibre optique à compensation de dispersion chromatique définis à la figure 14 ;
- la figure 19 représente la variaton de la dispersion chromatique dans les bandes S, C, L et U, des exemples de profil n°8a, n°8b et n°2c.

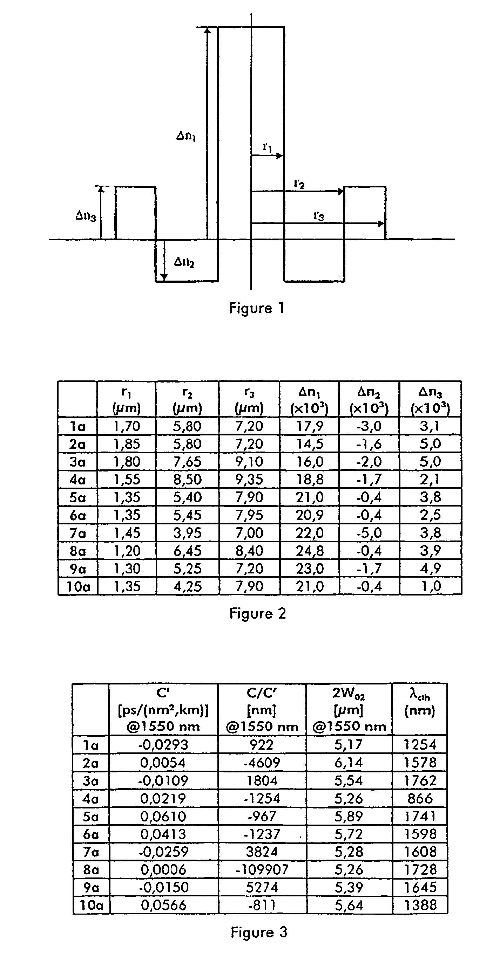

La figure 1 représente schématiquement un exemple de premier type de profil à trois tranches d'une fibre optique à compensation de dispersion chromatique. La première tranche appelée tranche centrale présente une différence maximale d'indice Δn1 avec l'indice constant de la gaine et un rayon extérieur r1. La différence d'indice maximale Δn1 est positive. De préférence, entre un rayon nul et le rayon r1, l'indice est constant et maximum. La deuxième tranche appelée tranche enterrée présente une différence maximale d'indice Δn2 avec l'indice constant de la gaine et un rayon extérieur r2. La différence d'indice maximale Δn2 est négative. De préférence, entre le rayon r1 et le rayon r2, l'indice est constant. La troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant. Audelà du rayon r3 se trouve la gaine d'indice constant.

La figure 2 représente un tableau comprenant les valeurs de rayons et de différences d'indice pour une dizaine d'exemples de profils de cet exemple de premier type de fibre optique à compensation de dispersion chromatique.

La colonne de gauche comprend la dénomination des exemples du n°1a au n°10a. Les trois colonnes suivantes expriment en $\mu$m des rayons du profil d'indice variable de coeur. Les trois dernières colonnes expriment mille fois des différences d'indice (sans unité).

La figure 3 représente un tableau comprenant certaines propriétés des profils de fibre optique à compensation de dispersion chromatique définis à la figure 2. La colonne de gauche comprend la dénomination des exemples du n°1a au n°10a. Pour chaque exemple considéré, les autres colonnes représentent des propriétés de la fibre optique correspondant à l'exemple considéré. La colonne suivante représente la pente de dispersion chromatique C' exprimée en ps/nm$^2$.km à une longueur d'onde valant 1550nm. La colonne suivante représente le rapport dispersion chromatique C sur pente de dispersion chromatique C' exprimée en nm à une longueur d'onde valant 1550nm. La colonne suivante représente le diamètre de mode $2W_{02}$, à la longueur d'onde de 1550nm, exprimé en $\mu$m. La dernière colonne représente la longueur de coupure théorique $\lambda_{cth}$ exprimée en nm.

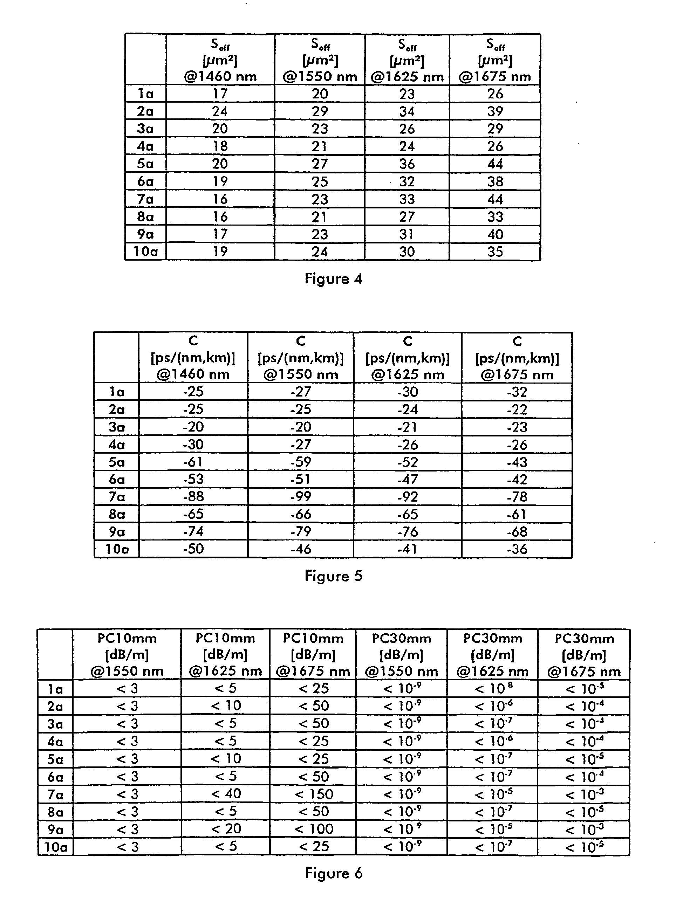

La figure 4 représente un tableau comprenant d'autres propriétés des profils de fibre optique à compensation de dispersion chromatique définis à la figure 2. La colonne de gauche comprend la dénomination des exemples déjà expliquée ci-dessus. Pour chaque exemple considéré, les autres colonnes représentent des propriétés de la fibre optique correspondant à l'exemple considéré. Les quatre colonnes suivantes représentent des surfaces effectives $S_{eff}$ exprimées en $\mu$m$^2$ respectivement aux longueurs d'onde de 1460nm, 1550nm, 1625nm et 1675nm.

La figure 5 représente un tableau comprenant d'autres propriétés des profils de fibre optique à compensation de dispersion chromatique définis à la figure 2. La colonne de gauche comprend la dénomination des exemples déjà expliquée ci-dessus. Pour chaque exemple considéré, les autres colonnes représentent des propriétés de la fibre optique correspondant à l'exemple considéré. Les quatre colonnes suivantes représentent des dispersions chromatiques C exprimées en ps/nm.km respectivement aux longueurs d'onde de 1460nm, 1550nm, 1625nm et 1675nm.

La figure 6 représente un tableau comprenant d'autres propriétés des profils de fibre optique à compensation de dispersion chromatique définis à la figure 2. La colonne de gauche comprend la dénomination des exemples déjà expliquée ci-dessus. Pour chaque exemple considéré, les autres colonnes représentent des propriétés de la fibre optique correspondant à l'exemple considéré. Les trois colonnes suivantes représentent des seuils maximum de pertes par courbure exprimées en dB/m pour un rayon de 10mm respectivement aux longueurs d'onde de 1550nm, 1625nm et 1675nm. Par exemple, pour l'exemple 1 a, lesdites pertes par courbure sont inférieures à 3dB/m. Les trois colonnes suivantes représentent des seuils maximum de pertes par courbure exprimées en dB/m pour un rayon de 30mm respectivement aux longueurs d'onde de 1550nm, 1625nm et 1675nm.

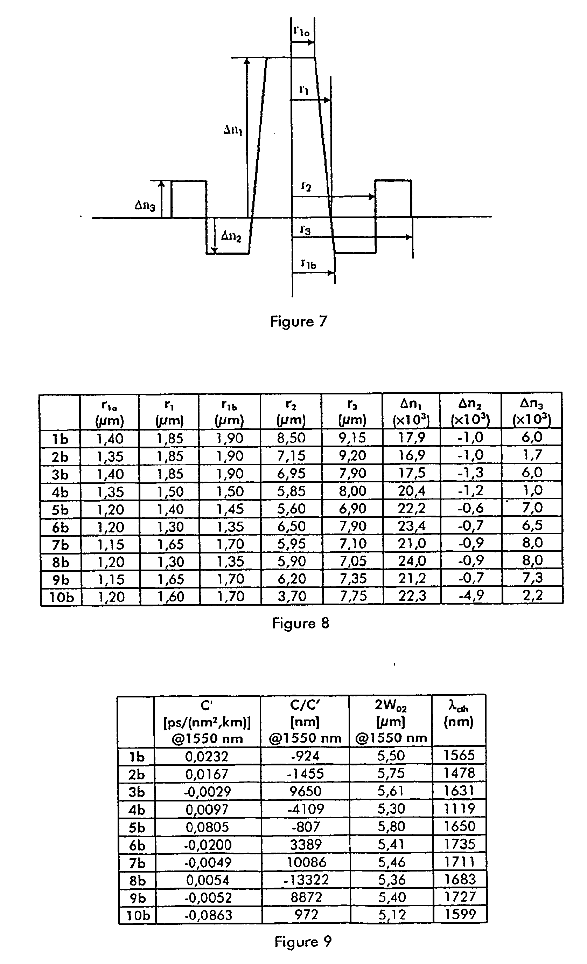

La figure 7 représente schématiquement un autre exemple de premier type de profil à trois tranches d'une fibre optique à compensation de dispersion chromatique. La première tranche appelée tranche centrale présente une différence maximale d'indice Δn1 avec l'indice constant de la gaine et un rayon extérieur r1b. La différence d'indice maximale Δn1 est positive. De préférence, entre un rayon nul et le rayon r1 a, l'indice est constant et maximum, il devient égal à celui de la gaine pour une valeur r1 du rayon et atteint celui de la deuxième tranche pour une valeur r1b. La deuxième tranche appelée tranche enterrée présente une différence maximale d'indice Δn2 avec l'indice constant de la gaine et un rayon extérieur r2. La différence d'indice maximale Δn2 est négative. De préférence, entre le rayon r1 b et le rayon r2, l'indice est constant. La troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant. Au-delà du rayon r3 se trouve la gaine d'indice constant.

La figure 8 représente un tableau comprenant les valeurs de rayons et de différences d'indice pour une dizaine d'exemples de profils de cet autre exemple de premier type de fibre optique à compensation de dispersion chromatique.

La colonne de gauche comprend la dénomination des exemples du n°1b au n°10b. Les cinq colonnes suivantes expriment en μm des rayons du profil d'indice variable de coeur. Les trois dernières colonnes expriment mille fois des différences d'indice (sans unité).

La figure 9 représente un tableau comprenant certaines propriétés des profils de fibre optique à compensation de dispersion chromatique définis à la figure 8. Sa description est analogue à celle de la figure 3.

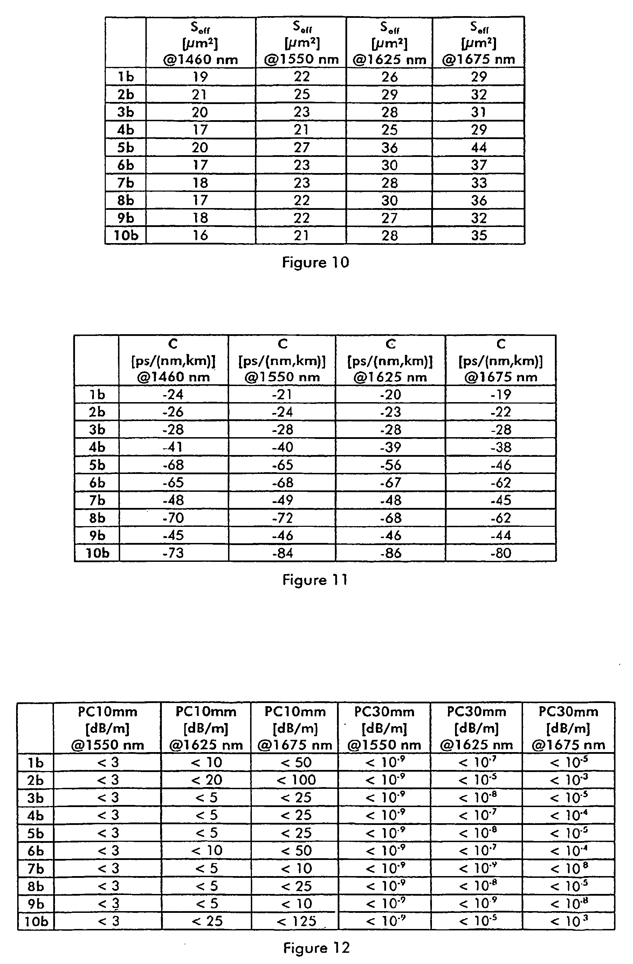

La figure 10 représente un tableau comprenant d'autres propriétés des profils de fibre optique à compensation de dispersion chromatique définis à la figure 8. Sa description est analogue à celle de la figure 4.

La figure 11 représente un tableau comprenant d'autres propriétés des profils de fibre optique à compensation de dispersion chromatique définis à la figure 8. Sa description est analogue à celle de la figure 5.

La figure 12 représente un tableau comprenant d'autres propriétés des profils de fibre optique à compensation de dispersion chromatique définis à la figure 8. Sa description est analogue à la figure 6.

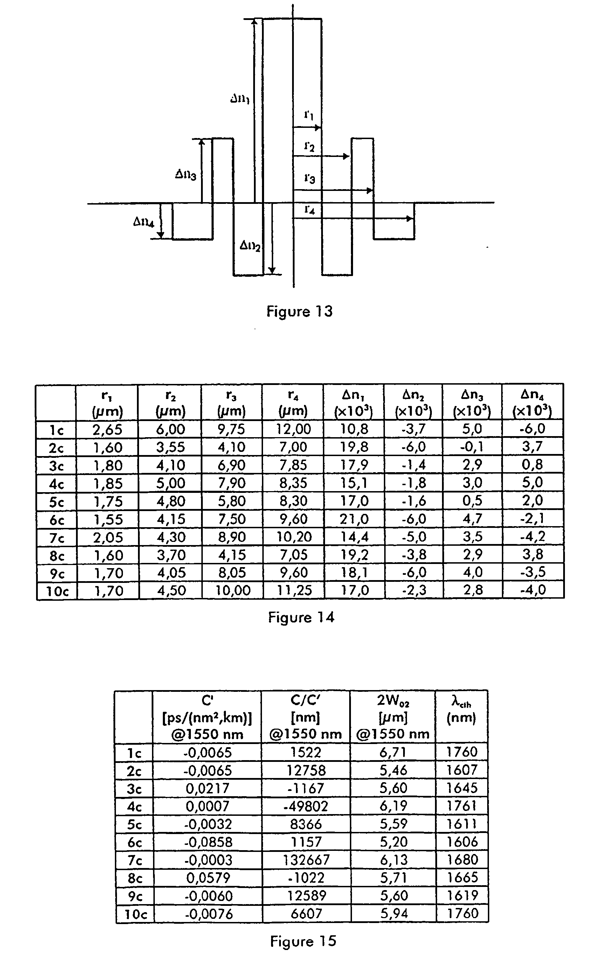

La figure 13 représente schématiquement des deuxième, troisième et quatrième types de profil à quatre tranches d'une fibre optique à compensation de dispersion chromatique. La première tranche appelée tranche centrale présente une différence maximale d'indice Δn1 avec l'indice constant de la gaine et un rayon extérieur r1. La différence d'indice maximale Δn1 est positive. De préférence, entre un rayon nul et le rayon r1, l'indice est constant. La deuxième tranche appelée tranche enterrée présente une différence maximale d'indice Δn2 avec l'indice constant de la gaine et un rayon extérieur r2. La différence d'indice maximale Δn2 est négative. De préférence, entre le rayon r1 et le rayon r2, l'indice est constant. Pour les deuxième et troisième types de profil, la troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant. Pour le quatrième type de profil, la troisième tranche appelée tranche enterrée présente une différence maximale d'indice Δn3 avec l'indice constant de la gaine et un rayon extérieur r3. La différence d'indice maximale Δn3 est négative. De préférence, entre le rayon r2 et le rayon r3, l'indice est constant. Pour le deuxième type de profil, la quatrième tranche appelée tranche enterrée présente une différence maximale d'indice Δn4 avec l'indice constant de la gaine et un rayon extérieur r4. La différence d'indice maximale Δn4 est négative. De préférence, entre le rayon r3 et le rayon r4, l'indice est constant. Au-delà du rayon r4 se trouve la gaine d'indice constant. Pour les troisième et quatrième types de profil, la quatrième tranche appelée tranche annulaire présente une différence maximale d'indice Δn4 avec l'indice constant de la gaine et un rayon extérieur r4. La différence d'indice maximale Δn4 est positive. De préférence, entre le rayon r3 et le rayon r4, l'indice est constant. Au-delà du rayon r4 se trouve la gaine d'indice constant.

La figure 14 représente un tableau comprenant les valeurs de rayons et de différences d'indice pour une dizaine d'exemples des deuxième, troisième et quatrième types de profil de fibre optique à compensation de dispersion chromatique. La colonne de gauche comprend la dénomination des exemples du n°1c au n°10c. Les quatre colonnes suivantes expriment en μm des rayons du profil d'indice variable de coeur. Les quatre dernières colonnes expriment mille fois des différences d'indice (sans unité).

La figure 15 représente un tableau comprenant certaines propriétés des profils de fibre optique à compensation de dispersion chromatique définis à la figure 14. Sa description est analogue à celle de la figure 3.

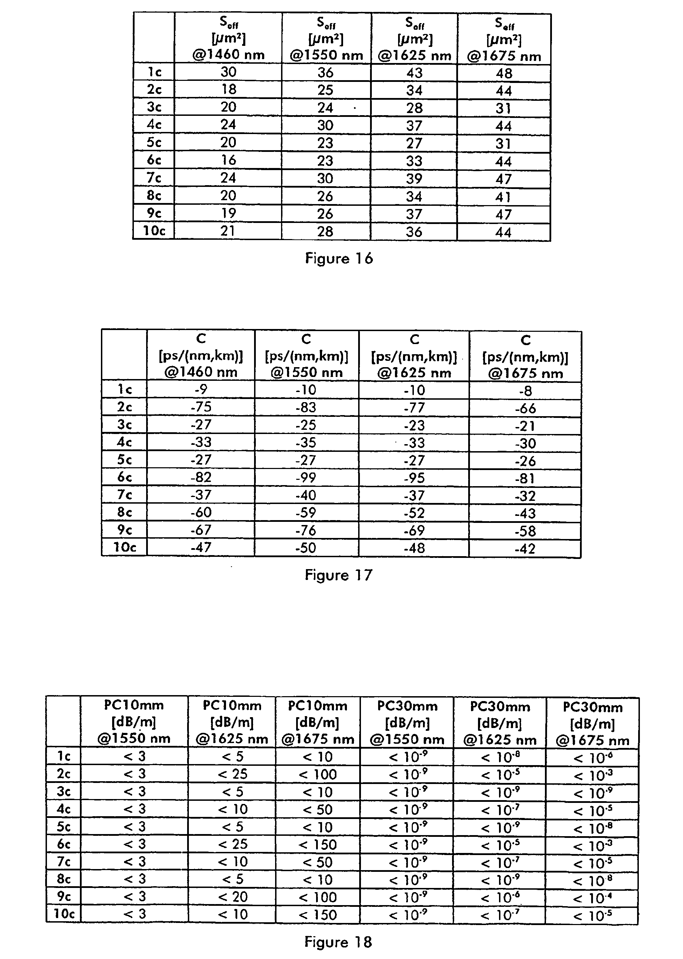

La figure 16 représente un tableau comprenant d'autres propriétés des profils de fibre optique à compensation de dispersion chromatique définis à la figure 14. Sa description est analogue à celle de la figure 4.

La figure 17 représente un tableau comprenant d'autres propriétés des profils de fibre optique à compensation de dispersion chromatique définis à la figure 14. Sa description est analogue à celle de la figure 5.

La figure 18 représente un tableau comprenant d'autres propriétés des profils de fibre optique à compensation de dispersion chromatique définis à la figure 14. Sa description est analogue à la figure 6.

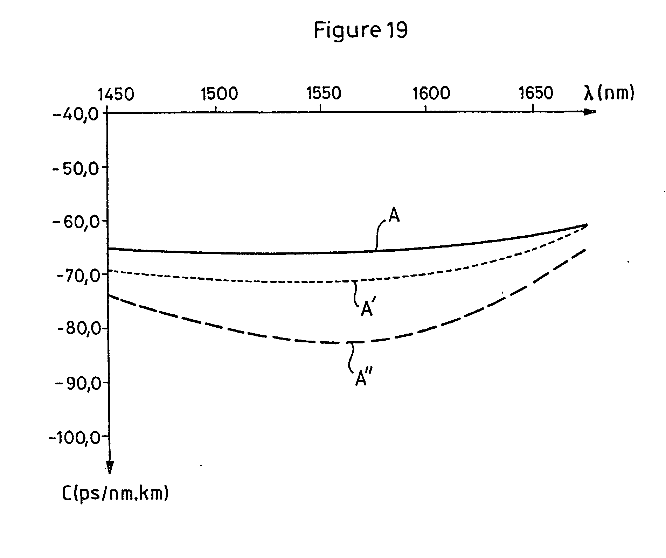

La figure 19 représente la variaton de la dispersion chromatique dans les bandes S, C, L et U, des exemples de profil n°8a, n°8b et n°2c, respectivement par le biais des courbes A, A' et A" dans lesquelles la dispersion chromatique C exprimée en ps/nm.km est située en ordonnée tandis que la longueur d'onde λ exprimée en nm est située en abscisse.

Selon un mode préférentiel de réalisation de l'invention, dans la fibre optique à compensation de dispersion chromatique selon l'invention, les rayons et les indices de chacune des tranches sont également déterminés de manière à ce que la fibre optique à compensation de dispersion présente aussi, à la longueur d'onde de 1550nm, une dispersion chromatique comprise entre -200ps/nm.km et -40ps/nm.km et une différence $\Delta n_1$ entre l'indice maximum de la tranche centrale et l'indice de la gaine comprise entre $17,0.10^{-3}$ et $25,0.10^{-3}$. L'intervalle modéré de valeurs prises par la différence entre l'indice maximum de la tranche centrale et l'indice de la gaine permet l'obtention d'une fibre optique à compensation de dispersion chromatique présentant à la fois une meilleure atténuation et/ou de meilleures pertes par courbure que les fibres optiques dont la différence entre l'indice maximum de la tranche centrale et l'indice de la gaine vaut environ $30.10^{-3}$ ou plus et une dispersion chromatique plus négative que des fibres optiques dont la différence entre l'indice maximum de la tranche centrale et l'indice de la gaine vaut environ $12.10^{-3}$ ou moins.

Dans la fibre optique à compensation de dispersion chromatique selon l'invention, les rayons et les indices de chacune des tranches sont déterminés de manière à ce que la fibre optique à compensation de dispersion présente aussi, à la longueur d'onde de 1550nm, une dispersion chromatique inférieure à -40ps/nm.km, une différence $\Delta n_1$ entre l'indice maximum de la tranche centrale et l'indice de la gaine comprise entre $17,0.10^{-3}$ et $25,0.10^{-3}$, une valeur du double de l'intégrale

$$S_2 = 2. \int_{r1}^{r2} \Delta n(r).r.dr \text{ , entre le rayon } (r_1) \text{ de la partie}$$

de la tranche centrale présentant un indice supérieur à l'indice de la gaine et le rayon $(r_2)$ de la partie de la tranche enterrée présentant un indice inférieur à l'indice de la gaine, du produit du rayon par la différence d'indice par rapport à la gaine, qui est comprise entre $-70.10^{-3}$ et $-4.10^{-3}$ $\mu m^2$. L'intervalle modéré de valeurs prises par la différence entre l'indice maximum de la tranche centrale et l'indice de la gaine permet l'obtention d'une fibre optique à compensation de dispersion chromatique présentant à la fois une meilleure atténuation et/ou de meilleures pertes par courbure que les fibres optiques dont la différence entre l'indice maximum de la tranche centrale et l'indice de la gaine vaut environ $30.10^{-3}$ ou plus et une dispersion chromatique plus négative que des fibres optiques dont la différence entre l'indice maximum de la tranche centrale et l'indice de la gaine vaut environ $12.10^{-3}$ ou moins.

Les fibres optiques selon l'invention concernent des fibres optiques destinées à être en module.


**Revendications**

1. Fibre optique à compensation de dispersion chromatique sur plusieurs bandes spectrales dont au moins la bande C,
   pour réseau de transmission à multiplexage en longueur d'onde,
   comportant successivement du centre vers la périphérie un coeur présentant un profil d'indice variable puis une gaine d'indice constant,
   le profil d'indice variable du coeur comportant successivement, du centre vers la périphérie,
   une tranche centrale d'indice maximum supérieur à l'indice de la gaine,
   une tranche enterrée d'indice minimum inférieur à l'indice de la gaine,
   une tranche annulaire d'indice maximum supérieur à l'indice de la gaine et inférieur à l'indice maximum de la tranche centrale,
   les rayons et les indices de chacune des tranches étant déterminés de manière à ce que la fibre optique à compensation de dispersion présente,
   d'une part à la longueur d'onde de 1550nm,

premièrement un rapport dispersion chromatique sur pente de dispersion chromatique dont la valeur absolue est supérieure à 750nm,
deuxièmement un diamètre de mode supérieur à $5\mu m$,
et d'autre part à la longueur d'onde de 1625nm, des pertes par courbure pour un rayon de 10mm qui sont inférieures à 400dB/m,
**caractérisée en ce que** les rayons et les indices de chacune des tranches sont déterminés de manière à ce que la fibre optique à compensation de dispersion présente, à la longueur d'onde de 1550nm,
une dispersion chromatique inférieure à -40ps/nm.km,
une différence $(\Delta n_1)$ entre l'indice maximum de la tranche centrale et l'indice de la gaine comprise entre $17,0.10^{-3}$ et $25,0.10^{-1}$,
une valeur du double de l'intégrale

$$(S_2 = 2. \int_{r1}^{r2} \Delta n(r).r.dr \text{ ), entre le rayon } (r_1) \text{ de la par-}$$

tie de la tranche centrale présentant un indice supérieur à l'indice de la gaine et le rayon $(r_2)$ de la partie de la tranche enterrée présentant un indice inférieur à l'indice de la gaine, du produit du rayon par la différence d'indice par rapport à la gaine, qui est comprise entre $-70.10^{-3}$ et $-4.10^{-3}$ $\mu m^2$.

2. Fibre optique à compensation de dispersion chromatique selon la revendication 1, **caractérisée en ce que** les rayons et les indices de chacune des tranches sont déterminés de manière à ce que la fibre optique à compensation de dispersion présente, à la longueur d'onde de 1550nm, un rapport dispersion chromatique sur pente de dispersion chromatique dont la valeur absolue est supérieure à 1500nm.

3. Fibre optique à compensation de dispersion chromatique selon l'une quelconque des revendications précédentes, **caractérisée en ce que** la fibre optique à compensation de dispersion chromatique compense la dispersion chromatique d'une fibre optique de ligne sur les bandes spectrales S, C, L et U.

4. Fibre optique à compensation de dispersion chromatique selon l'une quelconque des revendications précédentes,
   **caractérisée en ce que** la différence $(\Delta n_2)$ entre l'indice minimum de la tranche enterrée et l'indice de la gaine est comprise entre $-5,5.10^{-3}$ et $0,0.10^{-3}$,
   et **en ce que** le rayon extérieur $(r_2)$ de la tranche enterrée est compris entre $3,7\mu m$ et $6,7\mu m$.

5. Fibre optique à compensation de dispersion chromatique selon l'une quelconque des revendications précédentes,

**caractérisée en ce que** la différence ($\Delta n_3$) entre l'indice maximum de la tranche annulaire et l'indice de la gaine est comprise entre $1,0.10^{-3}$ et $8,0.10^{-3}$, et **en ce que** le rayon extérieur ($r_3$) de la tranche annulaire est compris entre $6,1\mu m$ et $8,4\mu m$.

**6.** Fibre optique à compensation de dispersion chromatique selon l'une quelconque des revendications précédentes **caractérisée en ce que** la valeur du double de l'intégrale $\left( S_1 = 2.\int_0^{r_1}\Delta n(r)r.dr \right)$, entre un rayon nul et le rayon ($r_1$) de la partie de la tranche centrale présentant un indice supérieur à l'indice de la gaine, du produit du rayon par la différence d'indice par rapport à la gaine, est comprise entre $32.10^{-3}$ et $52.10^{-3}$ $\mu m^2$.

**7.** Fibre optique à compensation de dispersion chromatique selon l'une quelconque des revendications 1 à 6 **caractérisée en ce que** la valeur du double de l'intégrale $\left( S_3 = 2.\int_{r_2}^{r_3}\Delta n(r)r.dr \right)$, entre le

rayon ($r_2$) de la partie de la tranche enterrée présentant un indice inférieur à l'indice de la gaine et le rayon ($r_3$) de la partie de la tranche annulaire présentant un indice supérieur à l'indice de la gaine, du produit du rayon par la différence d'indice par rapport à la gaine, est comprise entre $7.10^{-3}$ et $150.10^{-3}$ $\mu m^2$.

**8.** Fibre optique à compensation de dispersion chromatique selon l'une quelconque des revendications 1 à 7, **caractérisée en ce que** la valeur du triple de l'intégrale $\left( S_{11} = 3.\int_0^{r_1}\Delta n(r)r^2.dr \right)$, entre un rayon nul et le rayon ($r_1$) de la partie de la tronche centrale présentant un indice supérieur à l'indice de la gaine, du produit du carré du rayon par la différence d'indice par rapport à l'indice de la gaine, est comprise entre $40.10^{-3}$ $\mu m^3$ et $80.10^{-1}$ $\mu m^3$.

**9.** Fibre optique à compensation de dispersion selon l'une quelconque des revendications 1 à 8 **caractérisée en ce que** la tranche centrale est en forme de rectangle.

**10.** Fibre optique à compensation de dispersion chromatique selon la revendication 9 **caractérisée en ce que** le rayon ($r_1$) de la partie de la tranche centrale présentant un indice supérieur à l'indice de la gaine est compris entre $1,2\mu m$ et $1,7\mu m$.

**11.** Fibre optique à compensation de dispersion selon l'une quelconque des revendications 1 à 8, **caractérisée en ce que** la tranche centrale est en forme de trapèze.

**12.** Fibre optique à compensation de dispersion chromatique selon la revendication 11, **caractérisée en ce que** le rayon ($r_1$) de la partie de la tranche centrale présentant un indice supérieur à l'indice de la gaine est compris entre $1,2\mu m$ et $1,7\mu m$, et **en ce que** le rayon ($r_{1a}$) de la partie de la tranche centrale présentant l'indice maximum de la tranche centrale est compris entre $1,11\mu m$ et $1,70\mu m$.

**13.** Fibre optique à compensation de dispersion selon l'une quelconque des revendications 4 à 12, **caractérisée en ce que** les rayons et les indices de chacune des tranches sont déterminés de manière à ce que la fibre optique à compensation de dispersion présente une longueur d'onde de coupure théorique supérieure à 1600nm.

**14.** Fibre optique à compensation de dispersion selon l'une quelconque des revendications 1 à 3 **caractérisée en ce que** le profil d'indice variable du coeur est successivement constitué, du centre vers la périphérie,
d'une tronche centrale d'indice maximum supérieur à l'indice de la gaine,
d'une tranche enterrée d'indice minimum inférieur à l'indice de la gaine,
d'une première tranche annulaire d'indice maximum supérieur à l'indice de la gaine et inférieur à l'indice maximum de la tranche centrale,
d'une deuxième tronche annulaire d'indice maximum supérieur à l'indice de la gaine et supérieur à l'indice de la première tranche annulaire.

**15.** Fibre optique à compensation de dispersion selon l'une quelconque des revendications 1 à 3, **caractérisée en ce que** le profil d'indice variable du coeur est successivement constitué, du centre vers la périphérie,
d'une tranche centrale.d'indice maximum supérieur à l'indice de la gaine,
d'une première tranche enterrée d'indice minimum inférieur à l'indice de la gaine,
d'une deuxième tranche enterrée d'indice minimum inférieur à l'indice de la gaine et supérieur à l'indice de la première tranche enterrée,
d'une tranche annulaire d'indice maximum supérieur à l'indice de la gaine et inférieur à l'indice maximum de la tranche centrale.

**16.** Fibre optique à compensation de dispersion selon l'une quelconque des revendications 1 à 3, **caractérisée en ce que** le profil d'indice variable du coeur est successivement constitué, du centre vers la périphérie,

d'une tranche centrale d'indice maximum supérieur à l'indice de la gaine,

d'une première tranche enterrée d'indice minimum inférieur à l'indice de la gaine,

d'une tranche annulaire d'indice maximum supérieur à l'indice de la gaine et inférieur à l'indice maximum de la tranche centrale,

d'une deuxième tranche enterrée d'indice minimum inférieur à l'indice de la gaine.

17. Fibre optique à compensation de dispersion selon l'une quelconque des revendications 14 à 16, **caractérisée en ce que** les rayons et les indices de chacune des tranches sont déterminés de manière à ce que la fibre optique à compensation de dispersion présente une longueur d'onde de coupure théorique supérieure à 1550nm.

18. Fibre optique à compensation de dispersion selon l'une quelconque des revendications précédentes, **caractérisée en ce que** les rayons et les indices de chacune des tranches sont déterminés de manière à ce que la fibre optique à compensation de dispersion présente, à la longueur d'onde de 1550nm, une pente de dispersion chromatique dont la valeur absolue est inférieure, à 0,02ps/nm$^2$.km.

19. Fibre optique à compensation de dispersion selon l'une quelconque des revendications précédentes, **caractérisée en ce que** les rayons et les indices de chacune des tranches sont déterminés de manière à ce que la fibre optique à compensation de dispersion présente, à la longueur d'onde de 1550nm, une surface effective supérieure à 20$\mu$m$^2$.

20. Fibre optique à compensation de dispersion chromatique selon l'une quelconque des revendications précédentes, **caractérisée en ce que** les rayons et les indices de chacune des tranches sont déterminés de manière à ce que la fibre optique à compensation de dispersion présente, à la longueur d'onde de 1550nm,

une dispersion chromatique comprise entre -200ps/ nm.km et -40ps/nm.km.

21. Système de transmission à fibre optique comprenant l'association d'une fibre optique de ligne et d'une fibre optique à compensation de dispersion selon l'une quelconque des revendications 1 à 20, la fibre optique à compensation de dispersion étant en module.

## Claims

1. Optical fibre which compensates chromatic dispersion over a plurality of spectral bands including, at least, the C band,

for a wavelength multiplexing transmission network, comprising successively, from the centre towards the periphery, a core having a variable index profile and then a cladding of constant index,

the variable index profile of the core comprising successively, from the centre towards the periphery,

a central portion having a maximum index greater than the index of the cladding,

a depressed portion having a minimum index less than the index of the cladding,

an annular portion having a maximum index greater than the index of the cladding and less than the maximum index of the central portion,

the radii and indices of each of the portions being determined so that the optical fibre which compensates dispersion has,

on the one hand at a wavelength of 1550 nm,

firstly a ratio of chromatic dispersion to chromatic dispersion slope whose absolute value is greater than 750 nm,

secondly a mode diameter greater than 5 $\mu$m

and, on the other hand at a wavelength of 1625 nm, bending losses for a radius of 10 mm which are less than 400 dB/m,

**characterised in that** the radii and indices of each of the portions are determined so that the optical fibre which compensates dispersion has, at a wavelength of 1550 nm,

a chromatic dispersion of less than -40 ps/nm.km,

a difference ($\Delta n_1$) between the maximum index of the central portion and the index of the cladding of between 17.0 x 10$^{-3}$ and 25.0 x 10$^{-3}$, inclusive,

a value of twice the integral

$$( S_2 = 2. \int_{r1}^{r2} \Delta n(r).r.dr ),$$ between the radius ($r_1$) of

the part of the central portion having an index greater than the index of the cladding and the radius ($r_2$) of the part of the depressed portion having an index less than the index of the cladding, of the product of the radius and the difference in index with respect to the cladding, which is between -70 x 10$^{-3}$ and -4 x 10$^{-3}$ $\mu$m$^2$, inclusive.

2. Optical fibre which compensates chromatic dispersion, according to claim 1, **characterised in that** the radii and indices of each of the portions are determined so that the optical fibre which compensates dispersion has, at a wavelength of 1550 nm, a ratio of chromatic dispersion to chromatic dispersion slope whose absolute value is greater than 1500 nm.

3. Optical fibre which compensates chromatic dispersion, according to any one of the preceding claims, **characterised in that** the optical fibre which compensates chromatic dispersion compensates the chromatic dispersion of a line optical fibre over the S, C, L and U spectral bands.

4. Optical fibre which compensates chromatic dispersion, according to any one of the preceding claims, **characterised in that** the difference ($\Delta n_2$) between the minimum index of the depressed portion and the index of the cladding is between -5.5 x 10$^{-3}$ and 0.0 x 10$^{-3}$, inclusive, and **in that** the external radius ($r_2$) of the depressed portion is between 3.7 $\mu$m and 6.7 $\mu$m, inclusive.

5. Optical fibre which compensates chromatic dispersion, according to any one of the preceding claims, **characterised in that** the difference ($\Delta n_3$) between the maximum index of the annular portion and the index of the cladding is between 1.0 x 10$^{-3}$ and 8.0 x 10$^{-3}$, inclusive, and **in that** the external radius ($r_3$) of the annular portion is between 6.1 $\mu$m and 8.4 $\mu$m, inclusive.

6. Optical fibre which compensates chromatic dispersion, according to any one of the preceding claims, **characterised in that** the value of twice the integral

$$\left(S_1 = 2. \int_0^{r_1} \Delta n(r).r.dr\right),$$ between a zero radius and

the radius ($r_1$) of the part of the central portion having an index greater than the index of the cladding, of the product of the radius and the difference in index with respect to the cladding, is between 32 x 10$^{-3}$ and 52 x 10$^{-3}$ $\mu$m$^2$, inclusive.

7. Optical fibre which compensates chromatic dispersion, according to any one of claims 1 to 6, **characterised in that** the value of twice the integral

$$\left(S_3 = 2. \int_{r_2}^{r_3} \Delta n(r).r.dr\right),$$ between the radius ($r_2$) of

the part of the depressed portion having an index less than the index of the cladding and the radius ($r_3$) of the part of the annular portion having an index greater than the index of the cladding, of the product of the radius and the difference in index with respect to the cladding, is between 7 x 10$^{-3}$ and 150 x 10$^{-3}$ $\mu$m$^2$, inclusive.

8. Optical fibre which compensates chromatic dispersion, according to any one of claims 1 to 7, **characterised in that** the value of three times the integral

$$\left(S_{11} = 3. \int_0^{r_1} \Delta n(r).r^2.dr\right),$$ between a zero radius

and the radius ($r_1$) of the part of the central portion having an index greater than the index of the cladding, of the product of the square of the radius and the difference in index with respect to the index of the cladding, is between 40 x 10$^{-3}$ $\mu$m$^3$ and 80 x 10$^{-3}$ $\mu$m$^3$, inclusive.

9. Optical fibre which compensates dispersion, according to any one of claims 1 to 8, **characterised in that** the central portion is in the shape of a rectangle.

10. Optical fibre which compensates chromatic dispersion, according to claim 9, **characterised in that** the radius ($r_1$) of the part of the central portion having an index greater than the index of the cladding is between 1.2 $\mu$m and 1.7 $\mu$m, inclusive.

11. Optical fibre which compensates dispersion, according to any one of claims 1 to 8, **characterised in that** the central portion is in the shape of a trapezium.

12. Optical fibre which compensates chromatic dispersion, according to claim 11, **characterised in that** the radius ($r_1$) of the part of the central portion having an index greater than the index of the cladding is between 1.2 $\mu$m and 1.7 $\mu$m, inclusive, and **in that** the radius ($r_{1a}$) of the part of the central portion having the maximum index of the central portion is between 1.11 $\mu$m and 1.70 $\mu$m, inclusive.

13. Optical fibre which compensates dispersion, according to any one of claims 4 to 12, **characterised in that** the radii and indices of each of the portions are determined so that the optical fibre which compensates dispersion has a theoretical cut-off wavelength greater than 1600 nm.

14. Optical fibre which compensates dispersion, according to any one of claims 1 to 3, **characterised in that** the variable index profile of the core is composed of, successively, from the centre towards the periphery, a central portion having a maximum index greater than the index of the cladding, a depressed portion having a minimum index less than the index of the cladding, a first annular portion having a maximum index greater than the index of the cladding and less than the maximum index of the central portion, a second annular portion having a maximum index greater than the index of the cladding and greater than the index of the first annular portion.

15. Optical fibre which compensates dispersion, according to any one of claims 1 to 3, **characterised in that** the variable index profile of the core is composed of, successively, from the centre towards the periphery,

a central portion having a maximum index greater than the index of the cladding,

a first depressed portion having a minimum index less than the index of the cladding,

a second depressed portion having a minimum index less than the index of the cladding and greater than the index of the first depressed portion,

an annular portion having a maximum index greater than the index of the cladding and less than the maximum index of the central portion.

16. Optical fibre which compensates dispersion, according to any one of claims 1 to 3, **characterised in that** the variable index profile of the core is composed of, successively, from the centre towards the periphery,

a central portion having a maximum index greater than the index of the cladding,

a first depressed portion having a minimum index less than the index of the cladding,

an annular portion having a maximum index greater than the index of the cladding and less than the maximum index of the central portion,

a second depressed portion having a minimum index less than the index of the cladding.

17. Optical fibre which compensates dispersion, according to any one of claims 14 to 16, **characterised in that** the radii and indices of each of the portions are determined so that the optical fibre which compensates dispersion has a theoretical cut-off wavelength greater than 1550 nm.

18. Optical fibre which compensates dispersion, according to any one of the preceding claims, **characterised in that** the radii and indices of each of the portions are determined so that the optical fibre which compensates dispersion has, at a wavelength of 1550 nm, a chromatic dispersion slope whose absolute value is less than 0.02 ps/nm$^2$.km.

19. Optical fibre which compensates dispersion, according to any one of the preceding claims, **characterised in that** the radii and indices of each of the portions are determined so that the optical fibre which compensates dispersion has, at a wavelength of 1550 nm, an effective area greater than 20 $\mu$m$^2$.

20. Optical fibre which compensates chromatic dispersion, according to any one of the preceding claims, **characterised in that** the radii and indices of each of the portions are determined so that the optical fibre which compensates dispersion has, at a wavelength of 1550 nm,

a chromatic dispersion of between -200 ps/nm.km and -40 ps/nm.km, inclusive.

21. Optical fibre transmission system comprising the association of a line optical fibre and an optical fibre which compensates dispersion, according to any one of claims 1 to 20, the optical fibre which compensates dispersion being in module form.

**Patentansprüche**

1. Optische Faser zur Kompensation der chromatischen Dispersion in einer Vielzahl von Spektralbändern, unter welchen zumindest das C-Band ist, durch ein Übertragungsnetz mit Wellenlängenmultiplexen,

umfassend aufeinanderfolgend vom Zentrum zum Rand einen Kern, welcher ein variables Indexprofil aufweist, gefolgt von einer Hülle mit konstantem Index,

wobei das variable Indexprofil des Kerns aufeinanderfolgend vom Zentrum zum Rand hin enthält:

einen zentralen Abschnitt mit maximalem Index größer als der Index der Hülle,

einen vergrabenen Abschnitt mit minimalem Index kleiner als der Index der Hülle,

einen ringförmigen Abschnitt mit maximalem Index größer als der Index der Hülle und kleiner als der maximale Index des zentralen Abschnitts,

wobei die Radien und die Indizes jedes der Abschnitte in einer Weise bestimmt sind, dass die optische Faser zur Kompensation der Dispersion

auf der einen Seite bei der Wellenlänge von 1550 nm,

erstens ein Verhältnis der chromatischen Dispersion zur Steigung der chromatischen Dispersion, dessen Absolutwert größer als 750 nm ist,

zweitens einen Modendurchmesser größer als 5 $\mu$m,

und auf der anderen Seite bei der Wellenlänge von 1625 nm Verluste durch Krümmung um einen Radius von 10 mm, welche kleiner als 400 dB/m sind,

aufweist,

**dadurch gekennzeichnet, dass** die Radien und die Indizes jedes der Abschnitte in einer Weise bestimmt sind, dass die optische Faser zur Dispersionskompensation bei der Wellenlänge von 1550 nm

eine chromatische Dispersion kleiner als -40 ps/nm·km,

eine Differenz ($\Delta n_1$) zwischen dem maximalen Index des zentralen Abschnitts und dem Index der Hülle enthalten zwischen 17,0·10$^{-3}$ und 25,0·10$^{-3}$,

einen doppelten Wert des Integrals

$$\left( S_2 = 2 \cdot \int_{r1}^{r2} \Delta n(r) \cdot r \cdot dr \right)$$ von dem Radius ($r_1$) des Teils des zentralen Abschnitts, welcher einen Index größer als der Index der Hülle aufweist, zu dem Radius ($r_2$) des Teils des vergrabenen Abschnitts, welcher einen Index kleiner als der Index der Hülle aufweist, des Produkts des Radius mit der Indexdifferenz zu der Hülle, welcher zwischen -70·10⁻³ und -4·10⁻³ μm² enthalten ist, aufweist.

2. Optische Faser zur Kompensation der chromatischen Dispersion gemäß Anspruch 1, **dadurch gekennzeichnet, dass** die Radien und die Indizes jedes der Abschnitte in einer Weise bestimmt sind, dass die optische Faser zur Dispersionskompensation bei der Wellenlänge von 1550 nm ein Verhältnis der chromatischen Dispersion zu der Steigung der chromatischen Dispersion aufweist, dessen Absolutwert größer als 1500 nm ist.

3. Optische Faser zur Kompensation der chromatischen Dispersion gemäß einem der vorhergehenden Ansprüche, **dadurch gekennzeichnet, dass** die optische Faser zur Kompensation der chromatischen Dispersion die chromatische Dispersion einer optischen Leitungsfaser in den Spektralbändern S, C, L und U kompensiert.

4. Optische Faser zur Kompensation der chromatischen Dispersion gemäß einem der vorhergehenden Ansprüche,
**dadurch gekennzeichnet, dass** die Differenz ($\Delta n_2$) zwischen dem minimalen Index des vergrabenen Abschnitts und dem Index der Hülle zwischen -5,5·10⁻³ und 0,0·10⁻³ enthalten ist,
und dass der Außenradius ($r_2$) des vergrabenen Abschnitts zwischen 3,7 μm und 6,7 μm enthalten ist.

5. Optische Faser zur Kompensation der chromatischen Dispersion gemäß einem der vorhergehenden Ansprüche,
**dadurch gekennzeichnet, dass** die Differenz ($\Delta n_3$) zwischen dem maximalen Index des ringförmigen Abschnitts und dem Index der Hülle zwischen 1,0·10⁻³ und 8,0·10⁻³ enthalten ist,
und dass der Außenradius ($r_3$) des ringförmigen Abschnitts zwischen 6,1 μm und 8,4 μm enthalten ist.

6. Optische Faser zur Kompensation der chromatischen Dispersion gemäß einem der vorhergehenden Ansprüche,
**dadurch gekennzeichnet, dass** der doppelte Wert des Integrals $\left( S_1 = 2 \cdot \int_{0}^{r1} \Delta n(r) \cdot r \cdot dr \right)$ von einem Radius Null zu dem Radius ($r_1$) des Teils des zentralen Abschnitts, welcher einen Index größer als der Index der Hülle aufweist, des Produkts des Radius mit der Indexdifferenz zu der Hülle zwischen 32·10⁻³ und 52·10⁻³ μm² enthalten ist.

7. Optische Faser zur Kompensation der chromatischen Dispersion gemäß einem der Ansprüche 1-6, **dadurch gekennzeichnet, dass** der doppelte Wert des Integrals $\left( S_3 = 2 \cdot \int_{r2}^{r3} \Delta n(r) \cdot r \cdot dr \right)$ von dem Radius ($r_2$) des Teils des vergrabenen Abschnitts, welcher einen Index kleiner als der Index der Hülle aufweist, zu dem Radius ($r_3$) des Teils des ringförmigen Abschnitts, welcher einen Index größer als der Index der Hülle aufweist, des Produkts des Radius mit der Indexdifferenz zu der Hülle, zwischen 7·10⁻³ und 150·10⁻³ μm² enthalten ist.

8. Optische Faser zur Kompensation der chromatischen Dispersion gemäß einem der Ansprüche 1-7, **dadurch gekennzeichnet, dass** der dreifache Wert des Integrals $\left( S_{11} = 3 \cdot \int_{0}^{r1} \Delta n(r) \cdot r^2 \cdot dr \right)$ von einem Radius Null zu dem Radius ($r_1$) des Teils des zentralen Abschnitts, welcher einen Index größer als der Index der Hülle aufweist, des Produkts des Quadrates des Radius mit der Indexdifferenz zu dem Index der Hülle zwischen 40·10⁻³ μm³ und 80·10⁻³ μm³ enthalten ist.

9. Optische Faser zur Kompensation der Dispersion gemäß einem der Ansprüche 1-8, **dadurch gekennzeichnet, dass** der zentrale Abschnitt rechteckförmig ist.

10. Optische Faser zur Kompensation der chromatischen Dispersion gemäß Anspruch 9,
**dadurch gekennzeichnet, dass** der Radius ($r_1$) des Teils des zentralen Abschnitts, welcher einen Index größer als der Index der Hülle aufweist, zwischen 1,2 μm und 1,7 μm enthalten ist.

11. Optische Faser zur Kompensation der Dispersion gemäß einem der Ansprüche 1-8, **dadurch gekennzeichnet, dass** der zentrale Abschnitt trapezförmig ist.

12. Optische Faser zur Kompensation der chromatischen Dispersion gemäß Anspruch 11,

**dadurch gekennzeichnet, dass** der Radius ($r_1$) des Teils des zentralen Abschnitts, welcher einen Index größer als der Index der Hülle aufweist, zwischen 1,2 μm und 1,7 μm enthalten ist, und dass der Radius ($r_{1a}$) des Teils des zentralen Abschnitts, welcher den maximalen Index des zentralen Abschnitts aufweist, zwischen 1,11 μm und 1,70 μm enthalten ist,

13. Optische Faser zur Kompensation der Dispersion gemäß einem der Ansprüche 4-12, **dadurch gekennzeichnet, dass** die Radien und die Indizes jedes der Abschnitte in einer Weise bestimmt sind, dass die optische Faser zur Dispersionskompensation eine theoretische Abschneidewellenlänge größer als 1600 nm aufweist.

14. Optische Faser zur Kompensation der Dispersion gemäß einem der Ansprüche 1-3 **dadurch gekennzeichnet, dass** das variable Indexprofil des Kerns vom Zentrum zum Rand aufeinanderfolgend gebildet ist durch:

   einen zentralen Abschnitt mit maximalem Index größer als der Index der Hülle,
   einen vergrabenen Abschnitt mit minimalem Index kleiner als der Index der Hülle,
   einen ersten ringförmigen Abschnitt mit maximalem Index größer als der Index der Hülle und kleiner als der maximale Index des zentralen Abschnitts,
   einen zweiten ringförmigen Abschnitt mit maximalem Index größer als der Index der Hülle und größer als der Index des ersten ringförmigen Abschnitts.

15. Optische Faser zur Kompensation der Dispersion gemäß einem der Ansprüche 1-3, **dadurch gekennzeichnet, dass** das variable Indexprofil des Kerns vom Zentrum zum Rand aufeinanderfolgend gebildet ist durch:

   einen zentralen Abschnitt mit maximalem Index größer als der Index der Hülle,
   einen ersten vergrabenen Abschnitt mit minimalem Index kleiner als der Index der Hülle,
   einen zweiten vergrabenen Abschnitt mit minimalem Index kleiner als der Index der Hülle und größer als der Index des ersten vergrabenen Abschnitts,
   einen ringförmigen Abschnitt mit minimalem Index größer als der Index der Hülle und kleiner als der maximale Index des zentralen Abschnitts.

16. Optische Faser zur Kompensation der Dispersion gemäß einem der Ansprüche 1-3, **dadurch gekennzeichnet, dass** das variable Indexprofil des Kerns vom Zentrum zum Rand aufeinanderfolgend gebildet ist durch:

   einen zentralen Abschnitt mit maximalem Index größer als der Index der Hülle,
   einen ersten vergrabenen Abschnitt mit minimalem Index kleiner als der Index der Hülle,
   einen ringförmigen Abschnitt mit maximalem Index größer als der Index der Hülle und kleiner als der maximale Index des zentralen Abschnitts,
   einen zweiten vergrabenen Abschnitt mit minimalem Index kleiner als der Index der Hülle.

17. Optische Faser zur Kompensation der Dispersion gemäß einem der Ansprüche 14-16, **dadurch gekennzeichnet, dass** die Radien und die Indizes jedes der Abschnitte in einer Weise bestimmt sind, dass die optische Faser zur Dispersionskompensation eine theoretische Abschneidewellenlänge größer als 1550 nm aufweiset.

18. Optische Faser zur Kompensation der Dispersion gemäß einem der vorhergehenden Ansprüche, **dadurch gekennzeichnet, dass** die Radien und die Indizes jedes der Abschnitte in einer Weise bestimmt sind, dass die optische Faser zur Dispersionskompensation bei der Wellenlänge von 1550 nm eine Steigung der chromatischen Dispersion aufweist, deren Absolutwert kleiner als 0,02 ps/nm$^2$·km ist.

19. Optische Faser zur Kompensation der Dispersion gemäß einem der vorhergehenden Ansprüche, **dadurch gekennzeichnet, dass** die Radien und die Indizes jedes der Abschnitte in einer Weise bestimmt sind, dass die optische Faser zur Dispersionskompensation bei der Wellenlänge von 1550 nm eine effektive Oberfläche größer als 20 μm$^2$ aufweist.

20. Optische Faser zur Kompensation der chromatischen Dispersion gemäß einem der vorhergehenden Ansprüche, **dadurch gekennzeichnet, dass** die Radien und die Indizes jedes der Abschnitte in einer Weise bestimmt sind, dass die optische Faser zur Dispersionskompensation bei der Wellenlänge von 1550 nm eine chromatische Dispersion enthalten zwischen -200 ps/nm·km und -40 ps/nm·km aufweist.

21. System zur Transmission mit optischer Faser umfassend die Verbindung einer optischen Leitungsfaser und einer optischen Faser zur Kompensation der Dispersion gemäß einem der Ansprüche 1-20, wobei die optische Faser zur Kompensation der Dispersion im Modul ist.

Figure 1

| | $r_1$ (µm) | $r_2$ (µm) | $r_3$ (µm) | $\Delta n_1$ (×10³) | $\Delta n_2$ (×10³) | $\Delta n_3$ (×10³) |
|---|---|---|---|---|---|---|
| 1a | 1,70 | 5,80 | 7,20 | 17,9 | -3,0 | 3,1 |
| 2a | 1,85 | 5,80 | 7,20 | 14,5 | -1,6 | 5,0 |
| 3a | 1,80 | 7,65 | 9,10 | 16,0 | -2,0 | 5,0 |
| 4a | 1,55 | 8,50 | 9,35 | 18,8 | -1,7 | 2,1 |
| 5a | 1,35 | 5,40 | 7,90 | 21,0 | -0,4 | 3,8 |
| 6a | 1,35 | 5,45 | 7,95 | 20,9 | -0,4 | 2,5 |
| 7a | 1,45 | 3,95 | 7,00 | 22,0 | -5,0 | 3,8 |
| 8a | 1,20 | 6,45 | 8,40 | 24,8 | -0,4 | 3,9 |
| 9a | 1,30 | 5,25 | 7,20 | 23,0 | -1,7 | 4,9 |
| 10a | 1,35 | 4,25 | 7,90 | 21,0 | -0,4 | 1,0 |

Figure 2

| | $C'$ [ps/(nm²,km)] @1550 nm | $C/C'$ [nm] @1550 nm | $2W_{02}$ [µm] @1550 nm | $\lambda_{cth}$ (nm) |
|---|---|---|---|---|
| 1a | -0,0293 | 922 | 5,17 | 1254 |
| 2a | 0,0054 | -4609 | 6,14 | 1578 |
| 3a | -0,0109 | 1804 | 5,54 | 1762 |
| 4a | 0,0219 | -1254 | 5,26 | 866 |
| 5a | 0,0610 | -967 | 5,89 | 1741 |
| 6a | 0,0413 | -1237 | 5,72 | 1598 |
| 7a | -0,0259 | 3824 | 5,28 | 1608 |
| 8a | 0,0006 | -109907 | 5,26 | 1728 |
| 9a | -0,0150 | 5274 | 5,39 | 1645 |
| 10a | 0,0566 | -811 | 5,64 | 1388 |

Figure 3

| | $S_{eff}$ [$\mu m^2$] @1460 nm | $S_{eff}$ [$\mu m^2$] @1550 nm | $S_{eff}$ [$\mu m^2$] @1625 nm | $S_{eff}$ [$\mu m^2$] @1675 nm |
|---|---|---|---|---|
| 1a | 17 | 20 | 23 | 26 |
| 2a | 24 | 29 | 34 | 39 |
| 3a | 20 | 23 | 26 | 29 |
| 4a | 18 | 21 | 24 | 26 |
| 5a | 20 | 27 | 36 | 44 |
| 6a | 19 | 25 | 32 | 38 |
| 7a | 16 | 23 | 33 | 44 |
| 8a | 16 | 21 | 27 | 33 |
| 9a | 17 | 23 | 31 | 40 |
| 10a | 19 | 24 | 30 | 35 |

Figure 4

| | C [ps/(nm,km)] @1460 nm | C [ps/(nm,km)] @1550 nm | C [ps/(nm,km)] @1625 nm | C [ps/(nm,km)] @1675 nm |
|---|---|---|---|---|
| 1a | -25 | -27 | -30 | -32 |
| 2a | -25 | -25 | -24 | -22 |
| 3a | -20 | -20 | -21 | -23 |
| 4a | -30 | -27 | -26 | -26 |
| 5a | -61 | -59 | -52 | -43 |
| 6a | -53 | -51 | -47 | -42 |
| 7a | -88 | -99 | -92 | -78 |
| 8a | -65 | -66 | -65 | -61 |
| 9a | -74 | -79 | -76 | -68 |
| 10a | -50 | -46 | -41 | -36 |

Figure 5

| | PC10mm [dB/m] @1550 nm | PC10mm [dB/m] @1625 nm | PC10mm [dB/m] @1675 nm | PC30mm [dB/m] @1550 nm | PC30mm [dB/m] @1625 nm | PC30mm [dB/m] @1675 nm |
|---|---|---|---|---|---|---|
| 1a | < 3 | < 5 | < 25 | < $10^{-9}$ | < $10^{-8}$ | < $10^{-5}$ |
| 2a | < 3 | < 10 | < 50 | < $10^{-9}$ | < $10^{-6}$ | < $10^{-4}$ |
| 3a | < 3 | < 5 | < 50 | < $10^{-9}$ | < $10^{-7}$ | < $10^{-4}$ |
| 4a | < 3 | < 5 | < 25 | < $10^{-9}$ | < $10^{-6}$ | < $10^{-4}$ |
| 5a | < 3 | < 10 | < 25 | < $10^{-9}$ | < $10^{-7}$ | < $10^{-5}$ |
| 6a | < 3 | < 5 | < 50 | < $10^{-9}$ | < $10^{-7}$ | < $10^{-4}$ |
| 7a | < 3 | < 40 | < 150 | < $10^{-9}$ | < $10^{-5}$ | < $10^{-3}$ |
| 8a | < 3 | < 5 | < 50 | < $10^{-9}$ | < $10^{-7}$ | < $10^{-5}$ |
| 9a | < 3 | < 20 | < 100 | < $10^{-9}$ | < $10^{-5}$ | < $10^{-3}$ |
| 10a | < 3 | < 5 | < 25 | < $10^{-9}$ | < $10^{-7}$ | < $10^{-5}$ |

Figure 6

Figure 7

| | $r_{1a}$ (µm) | $r_1$ (µm) | $r_{1b}$ (µm) | $r_2$ (µm) | $r_3$ (µm) | $\Delta n_1$ (×10³) | $\Delta n_2$ (×10³) | $\Delta n_3$ (×10³) |
|-----|------|------|------|------|------|------|------|------|
| 1b | 1,40 | 1,85 | 1,90 | 8,50 | 9,15 | 17,9 | -1,0 | 6,0 |
| 2b | 1,35 | 1,85 | 1,90 | 7,15 | 9,20 | 16,9 | -1,0 | 1,7 |
| 3b | 1,40 | 1,85 | 1,90 | 6,95 | 7,90 | 17,5 | -1,3 | 6,0 |
| 4b | 1,35 | 1,50 | 1,50 | 5,85 | 8,00 | 20,4 | -1,2 | 1,0 |
| 5b | 1,20 | 1,40 | 1,45 | 5,60 | 6,90 | 22,2 | -0,6 | 7,0 |
| 6b | 1,20 | 1,30 | 1,35 | 6,50 | 7,90 | 23,4 | -0,7 | 6,5 |
| 7b | 1,15 | 1,65 | 1,70 | 5,95 | 7,10 | 21,0 | -0,9 | 8,0 |
| 8b | 1,20 | 1,30 | 1,35 | 5,90 | 7,05 | 24,0 | -0,9 | 8,0 |
| 9b | 1,15 | 1,65 | 1,70 | 6,20 | 7,35 | 21,2 | -0,7 | 7,3 |
| 10b | 1,20 | 1,60 | 1,70 | 3,70 | 7,75 | 22,3 | -4,9 | 2,2 |

Figure 8

| | C' [ps/(nm²,km)] @1550 nm | C/C' [nm] @1550 nm | $2W_{02}$ [µm] @1550 nm | $\lambda_{cth}$ (nm) |
|-----|---------|--------|------|------|
| 1b | 0,0232 | -924 | 5,50 | 1565 |
| 2b | 0,0167 | -1455 | 5,75 | 1478 |
| 3b | -0,0029 | 9650 | 5,61 | 1631 |
| 4b | 0,0097 | -4109 | 5,30 | 1119 |
| 5b | 0,0805 | -807 | 5,80 | 1650 |
| 6b | -0,0200 | 3389 | 5,41 | 1735 |
| 7b | -0,0049 | 10086 | 5,46 | 1711 |
| 8b | 0,0054 | -13322 | 5,36 | 1683 |
| 9b | -0,0052 | 8872 | 5,40 | 1727 |
| 10b | -0,0863 | 972 | 5,12 | 1599 |

Figure 9

| | $S_{eff}$ [$\mu m^2$] @1460 nm | $S_{eff}$ [$\mu m^2$] @1550 nm | $S_{eff}$ [$\mu m^2$] @1625 nm | $S_{eff}$ [$\mu m^2$] @1675 nm |
|---|---|---|---|---|
| 1b | 19 | 22 | 26 | 29 |
| 2b | 21 | 25 | 29 | 32 |
| 3b | 20 | 23 | 28 | 31 |
| 4b | 17 | 21 | 25 | 29 |
| 5b | 20 | 27 | 36 | 44 |
| 6b | 17 | 23 | 30 | 37 |
| 7b | 18 | 23 | 28 | 33 |
| 8b | 17 | 22 | 30 | 36 |
| 9b | 18 | 22 | 27 | 32 |
| 10b | 16 | 21 | 28 | 35 |

Figure 10

| | C [ps/(nm,km)] @1460 nm | C [ps/(nm,km)] @1550 nm | C [ps/(nm,km)] @1625 nm | C [ps/(nm,km)] @1675 nm |
|---|---|---|---|---|
| 1b | -24 | -21 | -20 | -19 |
| 2b | -26 | -24 | -23 | -22 |
| 3b | -28 | -28 | -28 | -28 |
| 4b | -41 | -40 | -39 | -38 |
| 5b | -68 | -65 | -56 | -46 |
| 6b | -65 | -68 | -67 | -62 |
| 7b | -48 | -49 | -48 | -45 |
| 8b | -70 | -72 | -68 | -62 |
| 9b | -45 | -46 | -46 | -44 |
| 10b | -73 | -84 | -86 | -80 |

Figure 11

| | PC10mm [dB/m] @1550 nm | PC10mm [dB/m] @1625 nm | PC10mm [dB/m] @1675 nm | PC30mm [dB/m] @1550 nm | PC30mm [dB/m] @1625 nm | PC30mm [dB/m] @1675 nm |
|---|---|---|---|---|---|---|
| 1b | < 3 | < 10 | < 50 | < $10^{-9}$ | < $10^{-7}$ | < $10^{-5}$ |
| 2b | < 3 | < 20 | < 100 | < $10^{-9}$ | < $10^{-5}$ | < $10^{-3}$ |
| 3b | < 3 | < 5 | < 25 | < $10^{-9}$ | < $10^{-8}$ | < $10^{-5}$ |
| 4b | < 3 | < 5 | < 25 | < $10^{-9}$ | < $10^{-7}$ | < $10^{-4}$ |
| 5b | < 3 | < 5 | < 25 | < $10^{-9}$ | < $10^{-8}$ | < $10^{-5}$ |
| 6b | < 3 | < 10 | < 50 | < $10^{-9}$ | < $10^{-7}$ | < $10^{-4}$ |
| 7b | < 3 | < 5 | < 10 | < $10^{-9}$ | < $10^{-9}$ | < $10^{8}$ |
| 8b | < 3 | < 5 | < 25 | < $10^{-9}$ | < $10^{-8}$ | < $10^{-5}$ |
| 9b | < 3 | < 5 | < 10 | < $10^{-9}$ | < $10^{-9}$ | < $10^{-8}$ |
| 10b | < 3 | < 25 | < 125 | < $10^{-9}$ | < $10^{-5}$ | < $10^{3}$ |

Figure 12

Figure 13

| | $r_1$ (µm) | $r_2$ (µm) | $r_3$ (µm) | $r_4$ (µm) | $\Delta n_1$ (×10³) | $\Delta n_2$ (×10³) | $\Delta n_3$ (×10³) | $\Delta n_4$ (×10³) |
|---|---|---|---|---|---|---|---|---|
| 1c | 2,65 | 6,00 | 9,75 | 12,00 | 10,8 | -3,7 | 5,0 | -6,0 |
| 2c | 1,60 | 3,55 | 4,10 | 7,00 | 19,8 | -6,0 | -0,1 | 3,7 |
| 3c | 1,80 | 4,10 | 6,90 | 7,85 | 17,9 | -1,4 | 2,9 | 0,8 |
| 4c | 1,85 | 5,00 | 7,90 | 8,35 | 15,1 | -1,8 | 3,0 | 5,0 |
| 5c | 1,75 | 4,80 | 5,80 | 8,30 | 17,0 | -1,6 | 0,5 | 2,0 |
| 6c | 1,55 | 4,15 | 7,50 | 9,60 | 21,0 | -6,0 | 4,7 | -2,1 |
| 7c | 2,05 | 4,30 | 8,90 | 10,20 | 14,4 | -5,0 | 3,5 | -4,2 |
| 8c | 1,60 | 3,70 | 4,15 | 7,05 | 19,2 | -3,8 | 2,9 | 3,8 |
| 9c | 1,70 | 4,05 | 8,05 | 9,60 | 18,1 | -6,0 | 4,0 | -3,5 |
| 10c | 1,70 | 4,50 | 10,00 | 11,25 | 17,0 | -2,3 | 2,8 | -4,0 |

Figure 14

| | C' [ps/(nm²,km)] @1550 nm | C/C' [nm] @1550 nm | $2W_{02}$ [µm] @1550 nm | $\lambda_{clh}$ (nm) |
|---|---|---|---|---|
| 1c | -0,0065 | 1522 | 6,71 | 1760 |
| 2c | -0,0065 | 12758 | 5,46 | 1607 |
| 3c | 0,0217 | -1167 | 5,60 | 1645 |
| 4c | 0,0007 | -49802 | 6,19 | 1761 |
| 5c | -0,0032 | 8366 | 5,59 | 1611 |
| 6c | -0,0858 | 1157 | 5,20 | 1606 |
| 7c | -0,0003 | 132667 | 6,13 | 1680 |
| 8c | 0,0579 | -1022 | 5,71 | 1665 |
| 9c | -0,0060 | 12589 | 5,60 | 1619 |
| 10c | -0,0076 | 6607 | 5,94 | 1760 |

Figure 15

| | $S_{eff}$ [$\mu m^2$] @1460 nm | $S_{eff}$ [$\mu m^2$] @1550 nm | $S_{eff}$ [$\mu m^2$] @1625 nm | $S_{eff}$ [$\mu m^2$] @1675 nm |
|---|---|---|---|---|
| 1c | 30 | 36 | 43 | 48 |
| 2c | 18 | 25 | 34 | 44 |
| 3c | 20 | 24 | 28 | 31 |
| 4c | 24 | 30 | 37 | 44 |
| 5c | 20 | 23 | 27 | 31 |
| 6c | 16 | 23 | 33 | 44 |
| 7c | 24 | 30 | 39 | 47 |
| 8c | 20 | 26 | 34 | 41 |
| 9c | 19 | 26 | 37 | 47 |
| 10c | 21 | 28 | 36 | 44 |

Figure 16

| | C [ps/(nm,km)] @1460 nm | C [ps/(nm,km)] @1550 nm | C [ps/(nm,km)] @1625 nm | C [ps/(nm,km)] @1675 nm |
|---|---|---|---|---|
| 1c | -9 | -10 | -10 | -8 |
| 2c | -75 | -83 | -77 | -66 |
| 3c | -27 | -25 | -23 | -21 |
| 4c | -33 | -35 | -33 | -30 |
| 5c | -27 | -27 | -27 | -26 |
| 6c | -82 | -99 | -95 | -81 |
| 7c | -37 | -40 | -37 | -32 |
| 8c | -60 | -59 | -52 | -43 |
| 9c | -67 | -76 | -69 | -58 |
| 10c | -47 | -50 | -48 | -42 |

Figure 17

| | PC10mm [dB/m] @1550 nm | PC10mm [dB/m] @1625 nm | PC10mm [dB/m] @1675 nm | PC30mm [dB/m] @1550 nm | PC30mm [dB/m] @1625 nm | PC30mm [dB/m] @1675 nm |
|---|---|---|---|---|---|---|
| 1c | < 3 | < 5 | < 10 | < $10^{-9}$ | < $10^{-8}$ | < $10^{-6}$ |
| 2c | < 3 | < 25 | < 100 | < $10^{-9}$ | < $10^{-5}$ | < $10^{-3}$ |
| 3c | < 3 | < 5 | < 10 | < $10^{-9}$ | < $10^{-9}$ | < $10^{-9}$ |
| 4c | < 3 | < 10 | < 50 | < $10^{-9}$ | < $10^{-7}$ | < $10^{-5}$ |
| 5c | < 3 | < 5 | < 10 | < $10^{-9}$ | < $10^{-9}$ | < $10^{-8}$ |
| 6c | < 3 | < 25 | < 150 | < $10^{-9}$ | < $10^{-5}$ | < $10^{-3}$ |
| 7c | < 3 | < 10 | < 50 | < $10^{-9}$ | < $10^{-7}$ | < $10^{-5}$ |
| 8c | < 3 | < 5 | < 10 | < $10^{-9}$ | < $10^{-9}$ | < $10^{-8}$ |
| 9c | < 3 | < 20 | < 100 | < $10^{-9}$ | < $10^{-6}$ | < $10^{-4}$ |
| 10c | < 3 | < 10 | < 150 | < $10^{-9}$ | < $10^{-7}$ | < $10^{-5}$ |

Figure 18

## Figure 19

## RÉFÉRENCES CITÉES DANS LA DESCRIPTION

**Documents brevets cités dans la description**

- WO 0101179 A
- WO 0219576 A
- EP 1111414 A